# EUROPEAN PATENT APPLICATION

(11) **EP 4 287 455 A1**
(43) Date of publication of application: **06.12.2023**
(21) Application number: 22746048.2
(22) Date of filing: 28.01.2022
(51) Int. Cl.: H02J 13/00, B60L 3/00, G06Q 50/10, H02J 7/00, H02J 7/02, H02J 7/35, B60L 50/60, B60L 58/12, H02J 3/00, H02J 3/38, B60L 53/10, B60L 53/63, B60L 53/67, B60L 53/68, G16Y 10/40, G16Y 20/30

(54) **INTEGRATED CONTROL DEVICE, CONTROL METHOD, SERVER, PROGRAM, AND STORAGE MEDIUM**

(30) Priority: 29.01.2021 JP 2021013826
(71) Applicant: HONDA MOTOR CO., LTD., Minato-ku Tokyo 107-8556 (JP)
(72) Inventor: KUDO, Jun, Wako-shi, Saitama 351-0193 (JP); SADANO, Hakaru, Wako-shi, Saitama 351-0193 (JP)
(74) Representative: Weickmann & Weickmann PartmbB
(86) International application number: PCT/JP2022/003411
(87) International publication number: WO 2022/163829

(57) **Abstract**

A control device includes: an acquisition unit which acquires (I) a first demand sent from an energy control device and including a demand amount, a demand time, and a demand position related to an energy demand, and (II) a second demand sent from a moving body control device which controls a moving body and including a demand amount, a demand time, and a demand position related to a demand of the moving body; and a processing unit which performs at least one of processing of deciding, on the basis of the first demand and the second demand acquired by the acquisition unit, a position and time at which the moving body moves or processing of determining whether it is possible to satisfy both demands of the first demand and the second demand.

## Description

### BACKGROUND

### 1. TECHNICAL FIELD

The present invention relates to an integrated control device, a control method, a server, a program, and a storage medium.

### 2. RELATED ART

Patent Document 1 discloses that "a V2G system includes: a parent aggregator which manages trade of power from a plurality of power supply sources to a power network; and a child aggregator which manages a plurality of pieces of transportation equipment, and ensures, to the parent aggregator, charge and discharge between at least one of storage batteries respectively mounted on the plurality of pieces of transportation equipment and the power network".

### CITATION LIST

### PATENT DOCUMENT

Patent Document 1: Japanese Patent Application Publication No. 2018-124674

### GENERAL DISCLOSURE

An integrated control device includes an acquisition unit which acquires (I) a first demand sent from an energy control device which controls energy and including a demand amount, a demand time, and a demand position related to an energy demand, and (II) a second demand sent from a moving body control device which controls a moving body and including a demand amount, a demand time, and a demand position related to a demand of the moving body. The integrated control device includes a processing unit which performs at least one of processing of deciding, on the basis of the first demand and the second demand acquired by the acquisition unit, a position and time at which the moving body moves or processing of determining whether it is possible to satisfy both demands of the first demand and the second demand.

The processing unit may manage first supply information that the moving body is capable of further supplying over the demand amount included in the first demand and second supply information that the moving body is capable of further supplying over the demand amount indicated by the second demand, and re-decide the position and the time, at which the moving body moves, according to the first demand and the second demand newly acquired by the acquisition unit.

When determining that it is not possible to satisfy the both demands of the first demand and the second demand, the processing unit may decide the position and the time, at which the moving body moves, by giving priority to one of the first demand and the second demand over another.

When determining that it is not possible to satisfy the both demands of the first demand and the second demand, the processing unit may decide the position and the time, at which the moving body moves, to satisfy at least the second demand and satisfy at least a demand amount and a demand time at some predetermined demand positions among a plurality of demand positions including the demand position that are included in the first demand.

The processing unit may decide, on the basis of the first demand, the position and the time at which the moving body moves, and determine, on the basis of the position and the time at which the moving body moves and which are decided on the basis of the first demand, whether the second demand is satisfied.

After the moving body starts moving on the basis of the position and the time at which the moving body moves and which are decided on the basis of the first demand and the second demand, the processing unit may re-decide the position and the time, at which the moving body moves, each time a predetermined condition is satisfied.

The processing unit may re-decide the position and the time, at which the moving body moves, each time the moving body arrives at the demand position.

The processing unit may re-decide the position and the time, at which the moving body moves, each time the moving body departs from the demand position.

In a second aspect, a server is provided. The server includes an acquisition unit which acquires (I) a first demand sent from an energy control device and including a demand amount, a demand time, and a demand position related to an energy demand, and (II) a second demand sent from a moving body control device which controls a moving body and including a demand amount, a demand time, and a demand position related to a demand of the moving body. The server includes a processing unit which performs at least one of processing of deciding, on the basis of the first demand and the second demand acquired by the acquisition unit, a position and time at which the moving body moves or processing of determining whether it is possible to satisfy both demands of the first demand and the second demand.

In a third aspect, a control method is provided. The control method includes acquiring a first demand including a demand amount, a demand time, and a demand position related to an energy demand. The control method includes acquiring a second demand including a demand amount, a demand time, and a demand position related to a demand of a moving body. The control method includes performing at least one of processing of deciding, on the basis of the first demand and the second demand, a position and time at which the moving body moves or processing of determining whether it is possible to satisfy both demands of the first demand and the second demand.

In a fourth aspect, a program is provided. The program causes a computer to function as the integrated control device described above.

In a fifth aspect, a storage medium is provided. The storage medium stores the program described above. The storage medium may be a non-transitory computer-readable storage medium.

The summary clause does not necessarily describe all necessary features of the embodiments of the present invention. The present invention may also be a sub-combination of the features described above.

### BRIEF DESCRIPTION OF THE DRAWINGS

Fig. 1 schematically illustrates a control system 100 according to a first embodiment.
Fig. 2 schematically illustrates a system configuration included in an integrated control device 50.
Fig. 3 illustrates an overview of an overall execution sequence of a system including the control system 100.
Fig. 4 illustrates an execution sequence of processing executed by the integrated control device 50, power control devices 40 to 44, a vehicle control device 60, and a vehicle 110.
Fig. 5 illustrates an example of a data structure of delivery information managed by a processing unit 220.
Fig. 6 schematically illustrates a change in a vehicle speed of the vehicle 110 predicted from departure from a base 10 and to return to the base 10 via stores 11 to 14.
Fig. 7 is a graph schematically illustrating predicted values of temporal changes of power consumption, power generation, and a remaining amount of a stationary battery on the next day in each base 10 and the stores 11 to 14.
Fig. 8 schematically illustrates control of the vehicle 110 based on operation information and power transmission/reception information.
Fig. 9 is a flowchart illustrating details of processing from S306 to S310 in Fig. 4.
Fig. 10 is a flowchart illustrating processing executed on the day on which the vehicle 110 departs from the base 10.
Fig. 11 is a flowchart illustrating processing executed when the vehicle 110 arrives at the stores 11 to 14.
Fig. 12 is a schematic diagram for explaining processing of the processing unit 220 in a second embodiment.
Fig. 13 is a schematic diagram for explaining processing of a processing unit 220 in a control system 1200 in a third embodiment.
Fig. 14 illustrates an example of a computer 2000.

### DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solution of the invention.

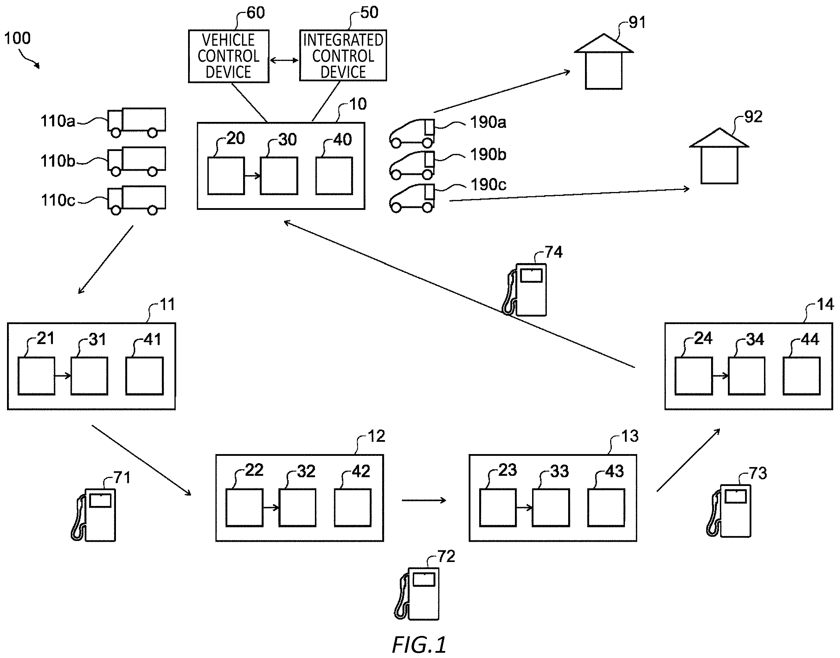

Fig. 1 schematically illustrates a control system 100 according to a first embodiment. The control system 100 includes a power control device 40, a power control device 41, a power control device 42, a power control device 43, a power control device 44, a vehicle control device 60, and an integrated control device 50.

In the present embodiment, a vehicle 110a, a vehicle 110b, and a vehicle 110c are vehicles including a traveling battery which accumulates driving power for traveling. The vehicle 110a, the vehicle 110b, and the vehicle 110c are, for example, electric vehicles. The vehicle 110a, the vehicle 110b, and the vehicle 110c are delivery vehicles capable of carrying items to a store 11, a store 12, a store 13, and a store 14. The store 11, the store 12, the store 13, and the store 14 are, for example, stores such as convenience stores. Note that in the present embodiment, the vehicle 110a, the vehicle 110b, and the vehicle 110c may be collectively referred to as "vehicle(s) 110". The vehicle 110 is provided to be able to communicate with the vehicle control device 60 through a mobile communication network or the like.

The base 10 is, for example, a business place for managing a work of delivering an item to the store 11, the store 12, the store 13, and the store 14. The base 10 functions as a base for parking the vehicle 110. The base 10 and the stores 11 to 14 can perform power transmission/reception to/from the traveling battery included in the vehicle 110. That is, the vehicle 110 can be used for energy management in the base 10 and the stores 11 to 14. The integrated control device 50 and the vehicle control device 60 are managed, for example, in the base 10. The integrated control device 50 and the vehicle control device 60 are provided so as to be able to communicate with each other by a communication line. The integrated control device 50 and the vehicle control device 60 may be provided outside the base 10. The integrated control device 50 and the vehicle control device 60 may be provided so as to be able to communicate with each other through a communication line such as the Internet. One or both of the integrated control device 50 and the vehicle control device 60 may be realized by a server such as a cloud server.

The base 10 includes a power generation device 20, a stationary battery 30, and a power control device 40. The power generation device 20 is, for example, a power generation device using renewable energy of a solar power generation device or the like. The stationary battery 30 is a battery provided in the base 10. The power control device 40 controls charging and discharging of the stationary battery 30 according to the power generation amount and the power demand of the power generation device 20 to satisfy the power demand in the base 10. The power control device 40 can communicate with the integrated control device 50 through a communication line such as the Internet.

The store 11 includes a power generation device 21, a stationary battery 31, and a power control device 41. The power generation device 21 is, for example, a power generation device using renewable energy of a solar power generation device or the like. The stationary battery 31 is a battery provided in the store 11. The power control device 41 controls charging and discharging of the stationary battery 31 according to the power generation amount and the power demand of the power generation device 21 to satisfy the power demand in the store 11. The store 12 includes a power generation device 22, a stationary battery 32, and a power control device 42. The store 13 includes a power generation device 23, a stationary battery 33, and a power control device 43. The store 14 includes a power generation device 24, a stationary battery 34, and a power control device 44. The power generation device 22, the power generation device 23, and the power generation device 24 include functions similar to those of the power generation device 21. The stationary battery 32, the stationary battery 33, and the stationary battery 34 include functions similar to those of the stationary battery 31. The power control device 42, the power control device 43, and the power control device 44 include functions similar to those of the power control device 41. Therefore, description of the power generation device, the stationary battery, and the power control device in the stores 12 to 14 is omitted.

In the present embodiment, it is assumed that it is determined that the vehicle 110 departs from the base 10 and then returns to the base 10 via the store 11, the store 12, and the store 13 in order. The vehicle control device 60 acquires a delivery demand indicating an item that each store desires to hand over on the next day from the stores 11 to 14, and transmits, as delivery schedule information, the delivery demand to the integrated control device 50. In addition, the power control devices 40 to 44 predict the power consumption and the power generation amount of the power generation devices 20 to 24 on the next day in each base 10 and the stores 11 to 14, and transmit, as power demand information, the predicted power consumption and power generation amount to the integrated control device 50. The integrated control device 50 decides the time when the vehicle 110 arrives at each of the stores 11 to 14 and the time when the vehicle departs to satisfy the delivery demand indicated by the delivery schedule information and the power demand information in each base 10 and the stores 11 to 14, and causes the traveling battery of the vehicle 110 and the stores 11 to 14 to perform power transmission/reception to/from each other when the vehicle 110 stops at each of the stores 11 to 14 and unloads items. Note that stands 71 to 74 are charging stands installed outside the stores 11 to 14. When determining that the battery of the vehicle 110 needs to be subjected to supplementary charging at any one stand of the stands 71 to 74, the integrated control device 50 may decide operation information having the stand as a stopover and cause the traveling battery to be charged at the stand according to the decided operation information.

The base 10 also functions as a base for managing delivery of the home delivery articles addressed to a residence 91 and a residence 92. The base 10 is a base of a delivery vehicle 190a, a delivery vehicle 190b, and a delivery vehicle 190c. The delivery vehicle 190a, the delivery vehicle 190b, and the delivery vehicle 190c deliver home delivery articles addressed to the residence 91 and the residence 92.

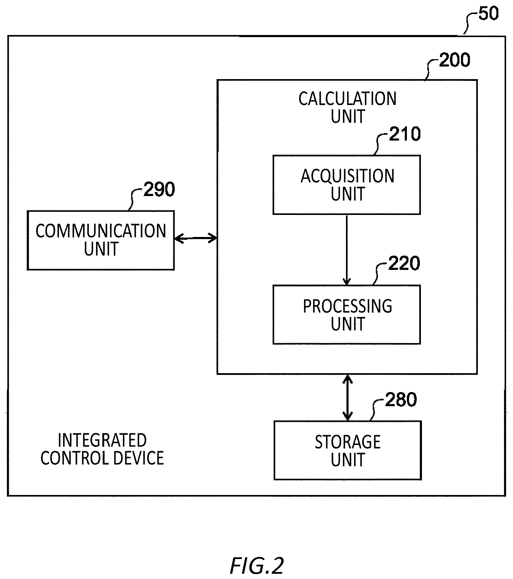

Fig. 2 schematically illustrates a system configuration included in the integrated control device 50. The integrated control device 50 includes a calculation unit 200, a storage unit 280, and a communication unit 290. The calculation unit 200 includes an acquisition unit 210 and a processing unit 220.

The calculation unit 200 is realized by, for example, a calculation processing device including a processor. The storage unit 280 is realized to include a nonvolatile storage medium. The calculation unit 200 performs processing by using the information stored in the storage unit 280. The communication unit 290 is responsible for communication with the power control devices 40 to 44, the vehicle control device 60, and the vehicle 110. The calculation unit 200 communicates with the outside through the communication unit 290.

The acquisition unit 210 acquires (I) a first demand sent from an energy control device which controls energy and including a demand amount, a demand time, and a demand position related to an energy demand, and (II) a second demand sent from a moving body control device which controls a moving body and including a demand amount, a demand time, and a demand position related to a demand of the moving body. The processing unit 220 performs at least one of processing of deciding, on the basis of the first demand and the second demand acquired by the acquisition unit 210, a position and time at which the moving body moves or processing of determining whether it is possible to satisfy both demands of the first demand and the second demand.

The processing unit 220 may manage first supply information that the moving body can further supply over the demand amount included in the first demand and second supply information that the moving body can further supply over the demand amount indicated by the second demand, and may re-decide the position and the time at which the moving body moves according to the first demand and the second demand newly acquired by the acquisition unit 210.

When determining that it is not possible to satisfy the both demands of the first demand and the second demand, the processing unit 220 may decide the position and the time at which the moving body moves by giving priority to one of the first demand and the second demand over the other.

When determining that it is not possible to satisfy the both demands of the first demand and the second demand, the processing unit 220 may decide the position and the time, at which the moving body moves, to satisfy at least the second demand and satisfy at least the demand amount and the demand time at some predetermined demand positions among a plurality of demand positions including the demand position that are included in the first demand.

The processing unit 220 may decide, on the basis of the first demand, the position and the time at which the moving body moves, and determine, on the basis of the position and the time at which the moving body moves and which are decided on the basis of the first demand, whether the second demand is satisfied.

After the moving body starts moving on the basis of the position and the time at which the moving body moves decided on the basis of the first demand and the second demand, the processing unit 220 may re-decide the position and the time, at which the moving body moves, each time a predetermined condition is satisfied.

The processing unit 220 may re-decide the position and the time, at which the moving body moves, each time the moving body arrives at the demand position. The processing unit 220 may re-decide the position and the time, at which the moving body moves, each time the moving body departs from the demand position.

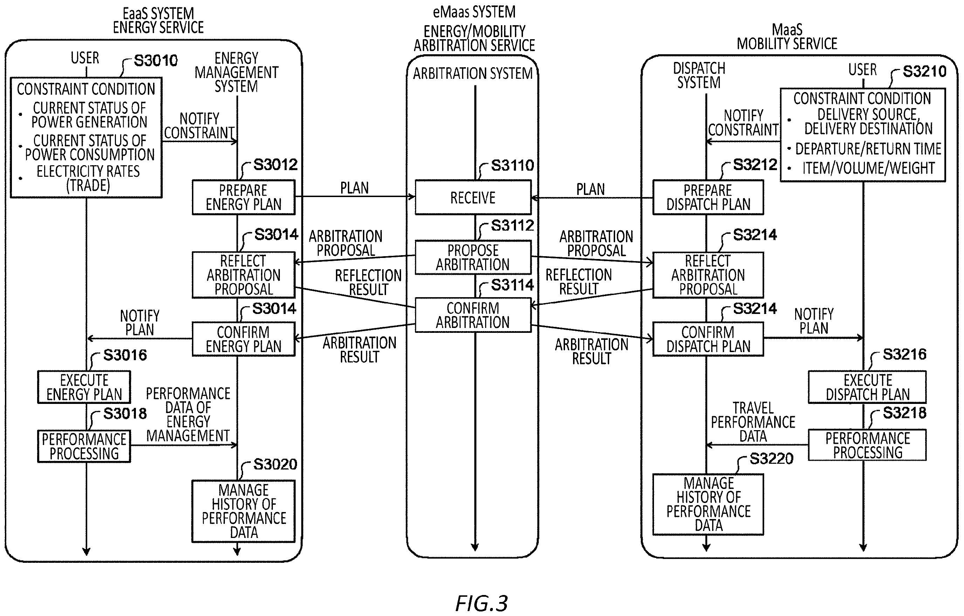

Fig. 3 illustrates an overview of an overall execution sequence of a system including the control system 100. An overall image of the system including the control system 100 will be described with reference to Fig. 3. The system including the control system 100 includes an EaaS system which provides energy services, a MaaS system which provides mobility services, and an eMaaS system which arbitrates energy mobility services.

The "EaaS system" is a system related to Energy as a Service. The EaaS system is provided as a service related to the provision of various kinds of energy such as power, gas, and renewable energy. For example, the EaaS system provides energy management as a service by using information communication technology. In the present embodiment, a service related to electrical energy is described as an example of "energy", but the "energy" is not limited to electrical energy and may include any energy.

The MaaS system is a system related to Mobility as a Service. The MaaS system utilizes information communication technology and provides, as a service, movement by various moving means such as vehicles, such as a truck, a bus, a taxi, and a train, and an airplane. In the present embodiment, a service related to movement by a vehicle for delivering an item will be described as the "movement", but the "movement" is not limited to movement of an item by a vehicle, and may include movement of any object by any moving means.

The eMaaS system provides a service of fusing Eaas and Maas. For example, the eMaaS system provides integrated services which optimize mobility and energy. For example, the eMaaS system is for arbitrating the Eaas system and the Maas system to optimize the whole including the energy service provided by the Eaas system and the mobility service provided by the Maas system to provide a service. For example, a dispatch plan prepared by the MaaS system and an energy plan by the EaaS system are fused to provide a service which minimizes the amount of power consumption, an environmental load, and the like as a whole system.

A flow of processing of each unit will be described with reference to Fig. 3. The processing of Fig. 3 shows processing while the energy plan and the dispatch plan for the next day are prepared on the previous day and the plan is executed according to the prepared plan.

The processing of the EaaS system illustrated in Fig. 3 is processing executed in each of the base 10 and the stores 11 to 14. In the EaaS system, an energy plan is prepared through exchange between an energy management system and a user, and the energy plan is executed. The energy management system is realized by, for example, the power control devices 40 to 44. Note that the "user" is a user, a system, or the like that manages the energy management system. In S3010, the user sets a constraint condition related to the energy plan and notifies the energy management system. The constraint condition is a condition which is a constraint in preparing the energy plan. The constraint condition may include constraints required to satisfy the power demand. The constraint conditions include, for example, information related to the current status of a power generation amount, the current status of a power consumption amount, and a power rate. The power generation amount is, for example, a power generation amount in the power generation devices 20 to 24. The power consumption amount is a power consumption amount in each of the base 10 and the stores 11 to 14. The power rate includes a power purchase price and a power selling price. The power purchase price is, for example, a condition related to an amount of money imposed as a consideration for each of the base 10 and the stores 11 to 14 receiving power from a grid. The power selling price is, for example, a condition related to an amount of money obtained as a consideration for each of the base 10 and the stores 11 to 14 supplying power to the grid.

In S3012, the energy management system prepares an energy plan for the next day. For example, the energy management system prepares an energy plan in each of the base 10 and the stores 11 to 14. The energy plan includes a power generation amount, a power storage amount, and power consumption for each time zone in one day. The energy plan is, for example, an energy plan for the next day. The energy plan determines how much power is generated, how much power is consumed, how much the stationary battery is charged, or how much the stationary battery is discharged in each of the base 10 and the stores 11 to 14 in each time zone. The power generation amount for each time zone on the next day may be predicted from environmental information such as weather information for the next day and past performance data. The energy plan may indicate in which time zone the suppression (peak cut) of the power consumption is executed in each of the base 10 and the stores 11 to 14. The energy plan may indicate how much power is received in each of the base 10 and the stores 11 to 14 from the outside in which time zone.

The energy management system may prepare an optimal energy plan in each of the base 10 and the stores 11 to 14. For example, the energy management system may prepare the energy plan such that the amount of power received from the grid at each of the base 10 and the stores 11 to 14 is minimized. The energy management system may prepare the energy plan such that the amount of money imposed as a consideration for receiving power from the grid in each of the base 10 and the stores 11 to 14 is minimized. The energy management system may prepare the energy plan such that the amount of money obtained as a consideration for supplying power to the grid in each of the base 10 and the stores 11 to 14 is maximized. In this manner, the energy management system prepares the optimal energy plan as an energy plan for the next day on the basis of the constraint condition. The energy plan determines the amount of power that needs to be received from the outside in each time zone of the next day. As will be described later, the amount of power that needs to be received from the outside can be supplied from a traveling battery included in the vehicle 110. The energy management system transmits the energy plan to a dispatch system of the eMaaS system.

The dispatch system is a system that manages the dispatch of the vehicle 110. The dispatch system is specifically provided by the vehicle control device 60. A "user" in the MaaS system is a user of the dispatch system. For example, the "user" is a person, a system, or the like that inputs delivery demand data in a delivery company. In S3210, the user inputs constraint conditions for dispatch. The constraint conditions for dispatch may include constraints needed to satisfy delivery demands. The constraint conditions for dispatch are constraint conditions for preparing the dispatch plan. The constraint conditions for dispatch include, for example, a delivery source and a delivery destination, a departure time and a return time, a type of an item as a load, a volume of the item, a weight of the item, and the like. Depending on the delivery source and the delivery destination, it is determined from which place to which place the vehicle needs to be operated. From the departure time and the return time, it is determined from which place and at which time the vehicle needs to depart and to which place and at which time the vehicle needs to return. The departure time may be a time at which the vehicle departs from the base 10, and the return time may be a time at which the vehicle returns to the base 10. A time width which allows a change may be set to the departure time and the return time. The type, volume, and weight of the item determine which vehicle can deliver the item.

In S3212, the dispatch system prepares a delivery plan for the next day on the basis of the constraint conditions notified from the user. For example, the dispatch system decides the number of vehicles 110 to be used for delivery, the departure time and the arrival time of the vehicle 110 to be used for delivery, the base 10, and the stores 11 to 14, the traveling route of the vehicle 110, the traveling speed of the vehicle 110, and the stand, on which supplementary charging needs to be performed, among the stands 71 to 74 such that the delivery demand defined by the constraint conditions is satisfied. The dispatch system transmits the dispatch plan to the eMaaS system.

The eMaaS system is a system which includes an arbitration system. The arbitration system is, for example, a system provided by the integrated control device 50. In S3110, the arbitration system receives the energy plan transmitted from the energy management system and the dispatch plan transmitted from the dispatch system.

In S3112, the arbitration system arbitrates the energy plan and the dispatch plan. For example, the arbitration system determines whether the energy plan is satisfied when the vehicle is dispatched according to the dispatch plan. For example, a period in which the vehicle 110 is predicted to be present in the base 10 and the stores 11 to 14 is determined from the dispatch plan. In the period in which the vehicle 110 is present in the base 10 and the stores 11 to 14, when the stores 11 to 14 can receive the power, which needs to be supplied from the outside, from the traveling battery included in the vehicle 110 in a necessary time zone, the arbitration system determines that the energy plan is satisfied. In addition, the arbitration system determines that in the stores 11 to 14 of the movement destination of the vehicle 110, the energy plan is satisfied when the power, which needs to be released to the outside by each of the stores 11 to 14, can be supplied to the traveling battery included in the vehicle 110 in a time zone in which it is necessary to release the power.

When determining that it is not possible to satisfy the energy plan when the vehicle is dispatched according to the dispatch plan, the arbitration system determines how to modify the energy plan to satisfy the dispatch plan. For example, the arbitration system determines how much power consumption in each time zone is to be changed with respect to the energy plan in each of the base 10 and the stores 11 to 14. In addition, the arbitration system determines how much the amount of power received from the grid in each time zone is to be changed in each of the base 10 and the stores 11 to 14. The arbitration system determines how much the amount of power released to the grid in each time zone is to be changed in each of the base 10 and the stores 11 to 14.

In addition, when determining that it is not possible to satisfy the energy plan when the vehicle is dispatched according to the dispatch plan, the arbitration system determines how to modify the dispatch plan to satisfy the energy plan. For example, the arbitration system determines how much the departure time and the return time are to be changed with respect to the dispatch plan received from the dispatch system in each of the base 10 and the stores 11 to 14. In addition, with respect to the dispatch plan, the arbitration system determines how to modify the traveling route of the vehicle 110. In addition, with respect to the dispatch plan, the arbitration system determines how many vehicles 110 to be used for delivery are to be modified. In addition, with respect to the dispatch plan, the arbitration system determines at which stand of the stands 71 to 74 and at which time supplementary charging of the base 10 is to be performed. In addition, with respect to the dispatch plan, the arbitration system determines how much the traveling speed of the vehicle 110 is to be modified.

In addition, when determining that it is not possible to satisfy the energy plan when the vehicle is dispatched according to the dispatch plan, the arbitration system determines how to modify both the energy plan and the dispatch plan such that the dispatch plan and the energy plan after the modification can be satisfied. As described above, the arbitration system determines how to modify the power consumption in each time zone in each of the base 10 and the stores 11 to 14, the amount of power received from the grid in each time zone, and the amount of power released to the grid in each time zone, and how to modify the departure time, the return time, the traveling route, the traveling speed, the number of the vehicles 110 to be used for delivery, and the stand which performs supplementary charging.

In S3112, the arbitration system transmits, to the energy management system and the arbitration system, an arbitration proposal including modification to the energy plan and the dispatch plan. When receiving the arbitration proposal from the arbitration system, in S3014, the energy management system reflects the arbitration proposal, which is received from the arbitration system, in the energy plan prepared in S3012. For example, with respect to the energy plan, the energy management system modifies the power consumption in each time zone in each of the base 10 and the stores 11 to 14, the amount of power received from the grid in each time zone, the amount of power released to the grid in each time zone, and the like according to the arbitration proposal. When the energy management system determines that the energy management in the base 10 and the stores 11 to 14 can be realized according to the arbitration proposal, the energy management system transmits, to the arbitration system, the energy plan reflecting the arbitration proposal as a reflection result.

Similarly, when receiving the arbitration proposal from the arbitration system, in S3214, the dispatch system reflects the arbitration proposal, which is received from the arbitration system, in the dispatch plan prepared in S3212. For example, with respect to the dispatch plan, the dispatch system modifies the departure time, the return time, the traveling route, the traveling speed, the number of the vehicles 110 to be used for delivery, the stand which performs supplementary charging, and the like according to the arbitration proposal. When determining that the delivery demand is satisfied in accordance with the arbitration proposal, the dispatch system transmits, to the arbitration system, the dispatch plan reflecting the arbitration proposal as a reflection result.

In S3114, when the reflection result of the arbitration proposal is received from the energy management system and the dispatch system, the arbitration system checks that the delivery demand and the power demand are satisfied by the energy plan and the dispatch plan in which the arbitration proposal is reflected. When it is checked that the dispatch demand and the power demand are satisfied, the EaaS system transmits, to the EaaS system and the dispatch system, an arbitration result that the plan is executed according to the reflection result of the arbitration proposal. Note that when the delivery demand and the power demand are not satisfied by the energy plan and the dispatch plan reflecting the arbitration proposal, the arbitration system may further modify the energy plan and the dispatch plan and transmit it as an arbitration result. The EaaS system, the dispatch system, and the EaaS system may repeat the processing of S3112, S3014, S3214, and S3114 until the delivery demand and the power demand are satisfied.

When receiving the arbitration result from the arbitration system, the energy management system confirms the energy plan in S3014, and notifies the user of the confirmed energy plan. In S3016, the user executes energy management according to the notified energy plan. In S3018, the user performs performance processing related to the execution of the energy plan. For example, the user performs processing of collecting and inputting the performance data of energy management including the performance data of the charge/discharge amount of the stationary battery, the performance data of the power generation, and the performance data of the power consumption amount in each time zone. In S3020, the energy management system manages the performance data, which is input from each of the users, as history information. Note that the energy management system may use the history information managed by the energy management system when the energy plan is prepared later.

When receiving the arbitration result from the arbitration system, in S3214, the dispatch system confirms the dispatch plan and notifies the user of the confirmed dispatch plan. In S3216, the user executes the plan according to the notified dispatch plan. In S3218, the user performs performance processing related to the execution of the dispatch plan. For example, the user includes processing of collecting and inputting travel performance data including the travel data of each vehicle 110, the remaining capacity of a traveling battery, and the like. In S3020, the dispatch system manages, as history information, the travel performance data input from the user. Note that the dispatch system may use the history information managed by the dispatch system when the dispatch plan is prepared later.

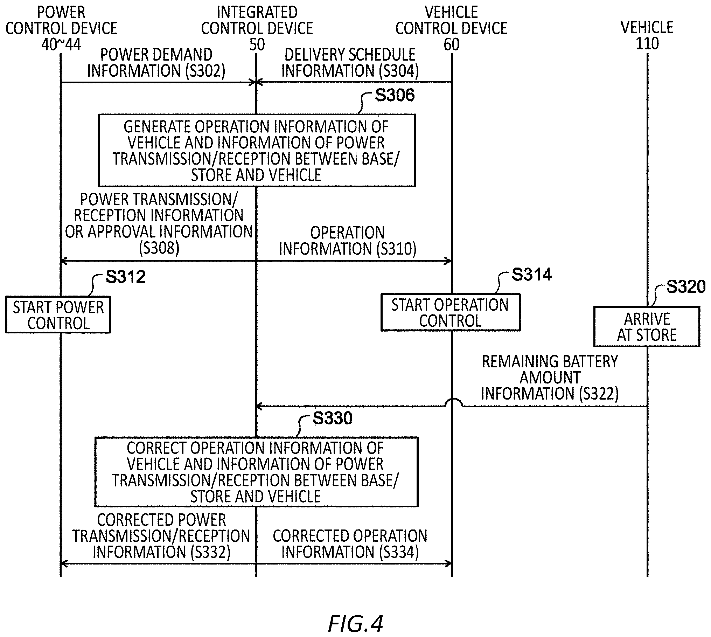

Fig. 4 illustrates an execution sequence of processing executed by the integrated control device 50, the power control devices 40 to 44, the vehicle control device 60, and the vehicle 110. In S302, the power control devices 40 to 44 transmit the power demand information to the integrated control device 50. For example, the power control device 40 predicts the power generation of the power generation device 21 on the next day and the power consumption of the base 10 on the next day. As an example, the power control device 40 stores history information in which the past power generation of the power generation device 21 and the past power consumption in the base 10 are associated with weather information. The power control device 40 predicts the power generation of the power generation device 21 on the next day and the power consumption on the next day on the basis of the weather forecast information for the next day and the history information. For example, the power control device 40 acquires information, which is associated with the weather information conforming to the weather information indicated by the weather forecast information for the next day, from the history information, thereby predicting the power generation of the power generation device 21 on the next day and the power consumption on the next day. Similarly, the power control devices 41 to 45 predict the power generation and the power consumption on the next day in each store. The power control devices 40 to 45 transmit, to the integrated control device 50, power demand information including information indicating the power generation and the power consumption on the next day predicted by each of the power control devices.

In S304, the vehicle control device 60 transmits, to the integrated control device 50, the delivery schedule information of items to the stores 11 to 14 on the next day. For example, the vehicle control device 60 makes a still picture of the delivery information on the basis of the delivery request of the product of the next day acquired from each of the stores 11 to 14. Specifically, the vehicle control device 60 acquires, as the delivery request, the information of the items to be delivered on the next day and information for identifying a delivery destination store. The information of the items includes a quantity of items to be delivered to each store, weight information of each item, delivery time information indicating a time at which the store desires delivery, and the like. In addition, the vehicle control device 60 manages vehicle information including the number of the vehicles 110 and the current remaining capacity of the traveling battery included in the vehicle 110. The vehicle control device 60 transmits, to the integrated control device 50, the delivery information including the next day delivery schedule information and the vehicle information.

In S306, the processing unit 220 performs processing related to the operation control of the vehicle 110 and the control of the power control devices 41 to 44 on the basis of the delivery information and the power demand information. For example, the processing unit 220 generates operation information including a position and time at which the vehicle 110 moves between the stores 11 to 14 and the traveling route of the vehicle 110. In addition, for the base 10 and the stores 11 to 14, the processing unit 220 generates the information of the power transmission/reception performed between the traveling battery of the vehicle 110 and the base 10 and the stores 11 to 14. The power transmission/reception information includes, for example, a time for performing the power transmission/reception and a power transmission/reception amount. The processing of S306 will be described later. In S308, the processing unit 220 transmits the power transmission/reception information to the power control devices 40 to 44. Note that the processing unit 220 transmits, to the power control devices 40 to 44 of the base 10 and the stores 11 to 14 for which the power transmission/reception is decided not to perform, approval information indicating that the control based on the power demand information generated by each of the power control devices 40 to 44 is approved. In S310, the processing unit 220 transmits the operation information to the vehicle control device 60.

In S312, the power control devices 40 to 44 start power control in the base 10 and the stores 11 to 14, respectively. In S314, the vehicle control device 60 starts the operation control of the vehicle 110 according to the operation information. For example, the vehicle control device 60 instructs a driver of the vehicle 110 in the base 10 to cause the vehicle 110 to depart from the base 10 according to the operation information.

In S320, when the vehicle 110 arrives at the store 11, the processing unit 220 determines that the vehicle 110 arrives at the store 11 from the position information based on a GPS signal transmitted from the vehicle 110. In S322, the processing unit 220 communicates with the vehicle 110 and receives the remaining amount of the traveling battery of the vehicle 110. In S330, the processing unit 220 corrects the operation information of the vehicle 110 and the power transmission/reception information in the base 10 and the stores 11 to 14 on the basis of the weather forecast information predicted at the present time and the remaining battery amount information of the vehicle 110. The specific processing of S330 will be described later. In S332, the processing unit 220 transmits the corrected power transmission/reception information to the power control devices 40 to 44. In S334, the processing unit 220 transmits the operation information to the vehicle control device 60. Note that each time the vehicle 110 arrives at the stores 11 to 14, the processing similar to the processing from S320 to S334 is repeated. Accordingly, the power transmission/reception information and the operation information can be updated on the basis of the latest information.

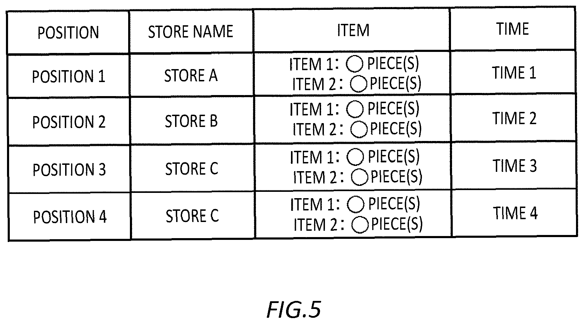

Fig. 5 illustrates an example of a data structure of delivery information managed by the processing unit 220. The delivery information is generated on the basis of the delivery schedule information transmitted from each of the stores 11 to 14. The delivery information includes a position, a store name, an item, and time. The "position" is information indicating a geographical position of each store. The "position" may include, for example, address, latitude, and longitude information. The "store name" is information indicating a name of a store. The "item" is item information indicating an item to be handed over to each store. The item information includes information indicating the number of each type of products to be handed over to the stores 11 to 14. The "time" is information indicating a time at which each of the stores 11 to 14 desires the delivery of the product. The processing unit 220 decides the operation information of the vehicle 110 such that each of the stores 11 to 14 can deliver an item by a desired time.

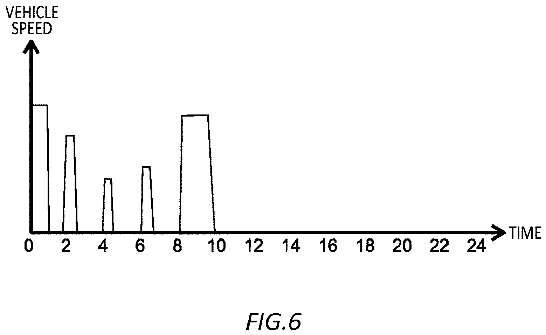

Fig. 6 schematically illustrates a change in the vehicle speed of the vehicle 110 from departure from the base 10 to return to the base 10 via the stores 11 to 14. The graph of Fig. 6 shows a vehicle speed from departure from the base 10 at 0:00 to arrival at the store 11 at 1:00, from departure from the store 11 at 2:00 to arrival at the store 12 at 2:30, from departure from the store 12 at 4:00 to arrival at the store 13 at 4:30, from departure from the store 13 at 6:00 to arrival at the store 14 at 6:30, and from departure from the store 14 at 8:00 to return to the base 10 at 10:00.

When deciding the operation information, the processing unit 220 refers to the delivery information to decide the traveling route and the vehicle speed on which and at which the vehicle 110 travels between each base 10 and the stores 11 to 14 such that the delivery schedule information is satisfied and the power consumption necessary for traveling of the vehicle 110 on the next day is minimized. As an example, on the basis of traffic congestion information of a road, gradient information of a road, signal information, and the like predicted on the next day, the processing unit 220 may decide the traveling route and the vehicle speed for traveling on the traveling route such that the power consumption necessary for traveling of the vehicle 110 is minimized. When the processing unit 220 transmits, to the vehicle control device 60, the operation information including the traveling route and the vehicle speed information, the vehicle control device 60 instructs the driver of the vehicle 110 through a navigation device included in the vehicle 110 such that the vehicle 110 travels according to the traveling route and the vehicle speed information.

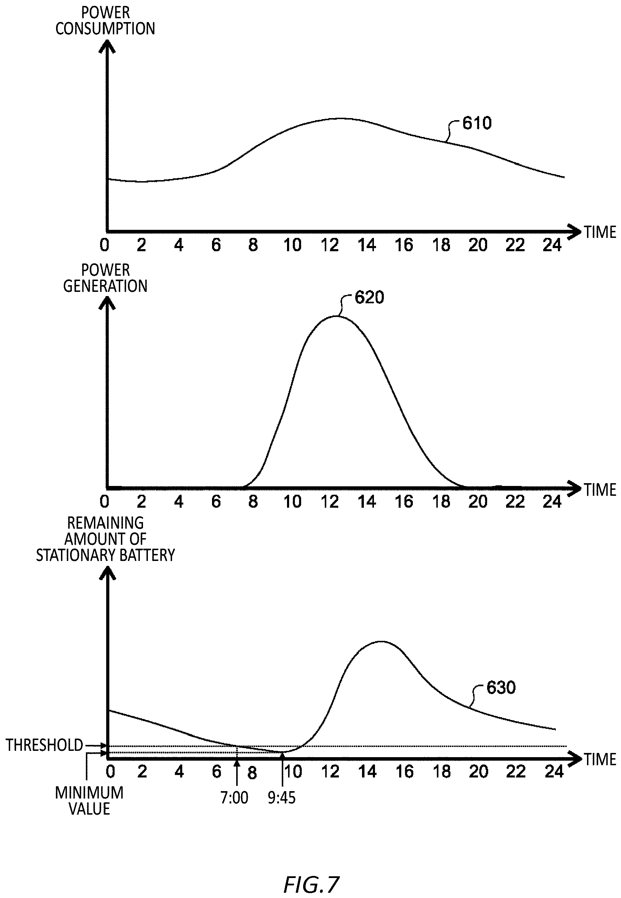

Fig. 7 is a graph schematically illustrating predicted values of temporal changes of the power consumption, the power generation, and the remaining amount of the stationary battery on the next day in each base 10 and the stores 11 to 14. The horizontal axis of each graph in Fig. 7 represents time in one day. A line 610 in Fig. 7 shows an example of a temporal change in power consumption predicted in the base 10 and the stores 11 to 14. A line 620 in Fig. 7 shows an example of a temporal change of the predicted power generation of the power generation devices 20 to 24. For example, the power control devices 40 to 44 may predict the power consumption and the power generation of the next day on the basis of the correlation between the past weather and the power consumption and the weather forecast information of the next day.

As a part of the power management, the power control devices 40 to 44 charge the stationary batteries 30 to 34 with surplus power when the power generation exceeds the power consumption, and cause the stationary batteries 30 to 34 to be discharged to cover at least a part of the power consumption when the power consumption exceeds the power generation. Accordingly, the power control devices 40 to 44 perform control to perform a peak shift of the power consumption.

In the stationary batteries 30 to 34, a threshold as a lower limit value of the remaining battery amount is set in advance. The power control devices 40 to 44 restrict the discharge of the stationary batteries 30 to 34 so that the remaining battery amount does not fall below a preset threshold. A line 630 in Fig. 7 indicates a change in the remaining battery amount in a case where it is assumed that the stationary batteries 30 to 34 are discharged according to the power consumption when the power consumption exceeds the power generation. As indicated by the line 630 in Fig. 7, the remaining battery amount reaches the threshold at 7:00 and reaches a minimum value at 9:45. Therefore, in a case where the power consumption, the power generation, and the remaining battery amount are predicted as illustrated in Fig. 7, for example, when the power can be supplied to the stationary battery having a power amount equal to or more than the power amount corresponding to the minimum value of the remaining battery amount by 7:00, the power consumption can be covered by the discharge of the stationary battery and the power generation. Therefore, when the power consumption, the power generation, and the remaining battery amount are predicted as illustrated in Fig. 7, the processing unit 220 decides the operation information such that the power can be supplied from the vehicle 110 to the stationary battery by 7:00.

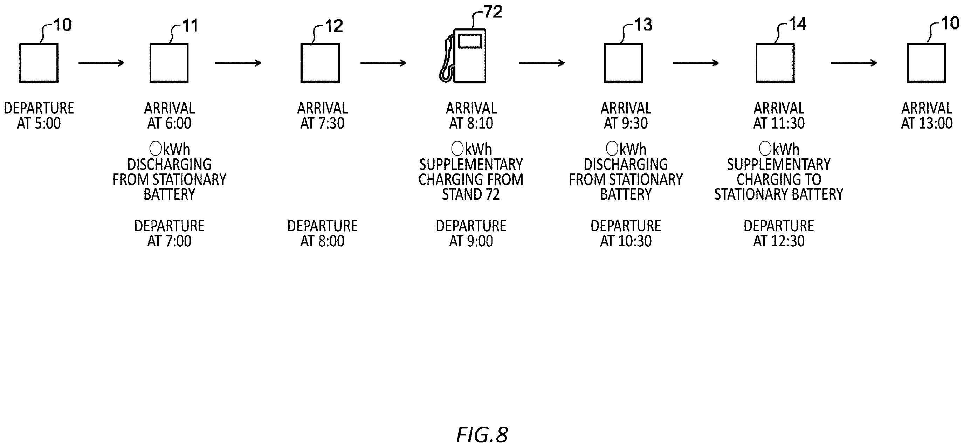

Fig. 8 schematically illustrates control of the vehicle 110 based on operation information and power transmission/reception information. The processing unit 220 generates operation information including the departure time of the base 10, the arrival time and the departure time of the stores 11 to 14, the arrival time to the base 10, and the vehicle speed of the vehicle 110 between the base 10 and the stores 11 to 14. In addition, when the traveling battery is subjected to supplementary charging at the stands 71 to 74, operation information including an arrival time and a departure time to/from the stand at which supplementary charging is performed is generated. In addition, the processing unit 220 generates power transmission/reception information including a time and a power amount for transmitting/receiving power to/from the base 10 and each of the stores 11 to 14.

For example, when the power consumption, the power generation, and the remaining battery amount are predicted as illustrated in Fig. 7 in the store 11, the operation information is decided such that the necessary power amount can be supplied from the vehicle 110 to the store 11 by 7:00. While the vehicle 110 departs from the base 10 at 5:00 and arrives at the store 11 at 6:00, and then an item to be handed over to the store 11 is unloaded from the vehicle 110, the processing unit 220 decides the operation information such that the traveling battery included in the vehicle 110 is caused to be discharged to be able to supply the necessary power amount to the store 11 by 7:00.

In addition, when the power amount of the stationary battery 33 is predicted to be insufficient also in the store 13, while supplementary charging is performed on the traveling battery at the stand 72 on the way traveling from the store 12 to the store 13, and an item to be handed over to the store 13 is unloaded from the vehicle 110 after arrival at the store 13, the processing unit 220 decides the operation information such that the traveling battery included in the vehicle 110 is discharged to be able to supply power to the store 13. In addition, when it is predicted that the power becomes excessive in the store 14, while an item to be handed over to the store 14 is unloaded from the vehicle 110 after arrival at the store 14, the processing unit 220 supplementarily charges the traveling battery with the power supplied from the power generation device 24 or the stationary battery 34 of the store 14.

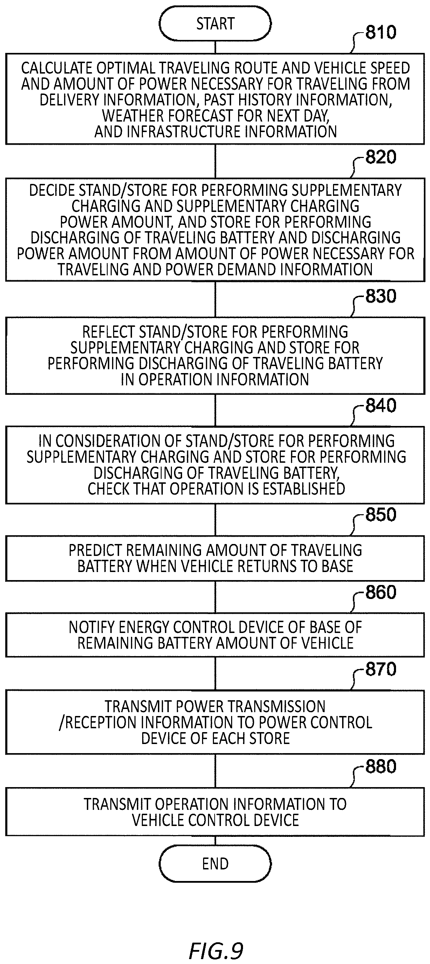

Fig. 9 is a flowchart illustrating details of processing from S306 to S310 in Fig. 4. The processing of the flowchart of Fig. 9 is executed on the day before the vehicle 110 departs from the base 10. For example, the processing of the flowchart of Fig. 9 may be executed between 23:00 and 0:00 on the day before the vehicle 110 departs from the base 10.

The processing unit 220 refers to the delivery information to decide the operation information including the traveling route and the vehicle speed of the vehicle 110, the departure time from the base 10, the arrival time to each store of the stores 11 to 14, the departure time from each store, and the arrival time to the base 10 such that the time when each of the stores 11 to 14 desires the delivery of items is satisfied, and the amount of power necessary for traveling of the vehicle 110 is minimized. At this time, on the basis of infrastructure information including traffic jam forecast information, the processing unit 220 decides the operation information such that the amount of power necessary for traveling of the vehicle 110 is minimized.

In S820, on the basis of the amount of power necessary for the vehicle 110 to travel according to the operation information and the power demand information, the processing unit 220 decides a stand and a store for performing supplementary charging on the traveling battery, a supplementary charging power amount, and a store for discharging the traveling battery and a discharging power amount. For example, the time when the vehicle 110 is predicted to stop at each of the stores 11 to 14 is determined from the operation information. In addition, from the power demand information, it is determined whether the excess of power is generated or the power is insufficient at the time when the vehicle 110 is predicted to stop at each of the stores 11 to 14. In this regard, when the power becomes excessive while the vehicle 110 stops at each of the stores 11 to 14 within the time when the vehicle 110 is predicted to stop at each of the stores 11 to 14, the processing unit 220 determines that supplementary charging is possible while the vehicle stops at each of the stores 11 to 14. In addition, on the basis of the traveling route of vehicle 110 and the positions where the stand 71 to the stand 74 are installed, the processing unit 220 determines that supplementary charging is possible at the stands 71 to 74 when the stands 71 to 74 are installed within a predetermined distance from the traveling route. When the power is insufficient in each of the stores 11 to 14, the processing unit 220 determines that the traveling battery can be discharged while the vehicle 110 stops at the stores 11 to 14.

In S830, the stands 71 to 74 and the stores 11 to 14 for performing supplementary charging and the stores 11 to 14 for performing discharging are reflected in the operation information. In S840, it is checked in consideration of the stands 71 to 74 and the stores 11 to 14 for performing supplementary charging and the stores 11 to 14 for performing discharging that the operation of the vehicle 110 is established. In S850, the processing unit 220 predicts the remaining amount of the traveling battery of the vehicle 110 when the vehicle 110 returns to the base 10 according to the operation information. In S860, the processing unit 220 notifies the power control device 40 of the base 10 of the remaining battery amount predicted in S850. In S870, the processing unit 220 transmits, to the power control devices 41 to 44 of the stores 11 to 14, the information of the power transmission/reception with the traveling battery of the vehicle 110. In S880, the processing unit 220 transmits the operation information to the vehicle control device 60.

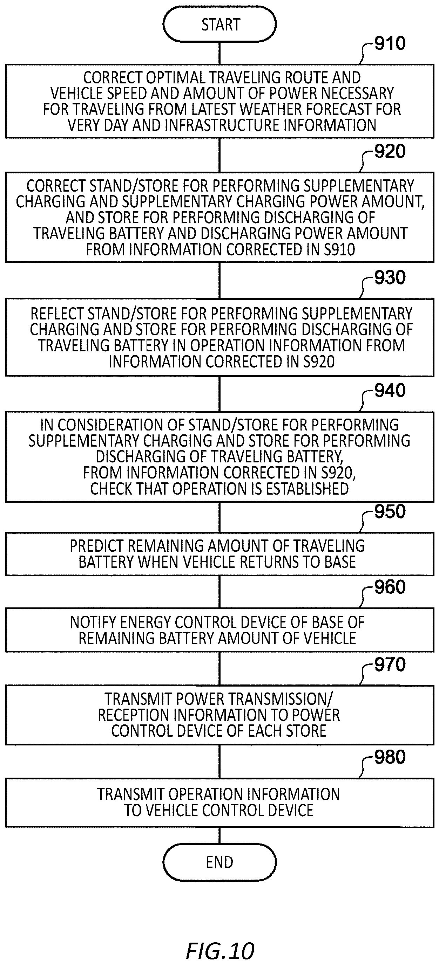

Fig. 10 is a flowchart illustrating processing executed on the day on which the vehicle 110 departs from the base 10. The processing unit 220 corrects the operation information including the traveling route and the vehicle speed of the vehicle 110 and the amount of power necessary for traveling of the vehicle 110 on the basis of the latest weather forecast information and infrastructure information at a timing a predetermined time before the time when the vehicle 110 departs from the base 10. In S920, on the basis of the information corrected in S910, the processing unit 220 corrects the stand and store for performing supplementary charging on the traveling battery and the supplementary charging power amount, and the store for performing the discharging of the traveling battery and the discharging power amount.

In S930, on the basis of the information corrected in S920, the processing unit 220 reflects the stands 71 to 74 and the stores 11 to 14 for performing supplementary charging and the stores 11 to 14 for performing discharging in the operation information. In S940, on the basis pf the information corrected in S920, in consideration of the stands 71 to 74 and the stores 11 to 14 for performing supplementary charging and the stores 11 to 14 for performing discharging, the processing unit 220 checks that the operation of the vehicle 110 is established. In S950, the processing unit 220 predicts the remaining amount of the traveling battery of the vehicle 110 when the vehicle 110 returns to the base 10 according to the corrected operation information. In S960, the processing unit 220 notifies the power control device 40 of the base 10 of the remaining battery amount predicted in S950. In S970, the processing unit 220 transmits, to the power control devices 41 to 44 of the stores 11 to 14, the information of the power transmission/reception with the traveling battery of the vehicle 110. In S980, the processing unit 220 transmits the operation information to the vehicle control device 60.

By the processing described with reference to Fig. 10, the operation information and the power transmission/reception information of the vehicle 110 can be updated on the basis of the latest information before the vehicle 110 departs from the base 10.

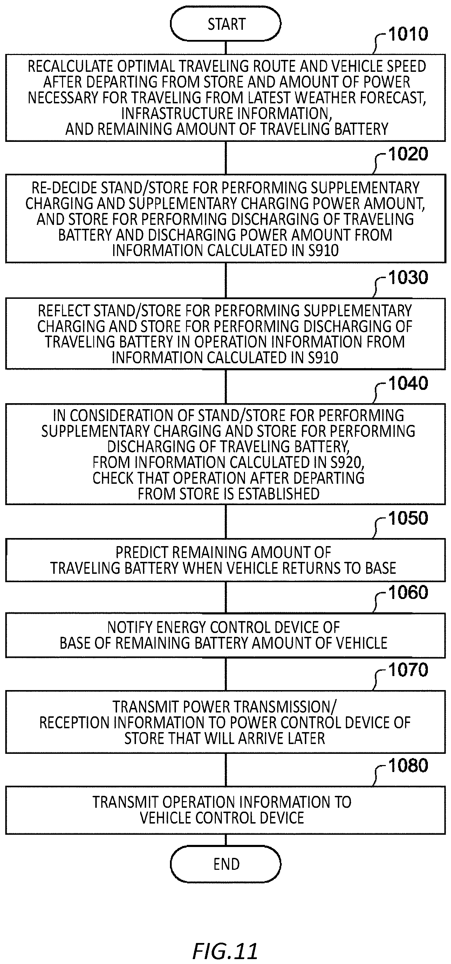

Fig. 11 is a flowchart illustrating processing executed when the vehicle 110 arrives at the stores 11 to 14. The processing of the flowchart of Fig. 11 can be applied to the processing from S330 to S334 of Fig. 4. Herein, a case will be described in which the vehicle 110 arrives at the store 11. When it is determined on the basis of the current position information of the vehicle 110 received from the vehicle 110 that the vehicle 110 has arrived at the store 11, in S1010, on the basis of the latest weather forecast information, the infrastructure information, and the remaining amount of the traveling battery of the vehicle 110, the processing unit 220 recalculates the operation information including the traveling route and the vehicle speed of the vehicle 110 after departing from the store 11 and the amount of power necessary for traveling of the vehicle. In S1020, on the basis of the information recalculated in S1010, the processing unit 220 re-decides the stand and the store for performing supplementary charging on the traveling battery and the supplementary charging power amount, and the store for performing the discharging of the traveling battery and the discharging power amount.

In S1030, on the basis of the information decided in S1020, the processing unit 220 reflects the stands 71 to 74 and the stores 12 to 14 for performing supplementary charging and the stores 12 to 14 for performing discharge in the operation information. In S1040, on the basis of the information decided in S1020, in consideration of the stands 71 to 74 and the stores 12 to 14 for performing supplementary charging and the stores 12 to 14 for performing discharging, the processing unit 220 checks that the operation of the vehicle 110 is established. In S1050, the processing unit 220 re-predicts the remaining amount of the traveling battery of the vehicle 110 when the vehicle 110 returns to the base 10 according to the decided operation information. In S1060, the processing unit 220 notifies the power control device 40 of the base 10 of the remaining battery amount predicted in S1050. In S1070, the processing unit 220 transmits, to the power control devices 42 to 44 of the stores 12 to 14, the information of the power transmission/reception with the traveling battery of the vehicle 110. In S1080, the processing unit 220 transmits the operation information to the vehicle control device 60.

Processing similar to the processing described with reference to Fig. 11 is executed each time the vehicle 110 arrives at the store 12, the store 13, and the store 14. Accordingly, it is possible to update the operation information and the power transmission/reception information of the vehicle 110 on the basis of the latest information.

Note that the processing in a case where the vehicle 110 arrives at the stores 11 to 14 has been described with reference to S330 of Fig. 4 and Fig. 11. The processing unit 220 may execute processing, which is similar to the processing described with reference to S303 of Fig. 4 and Fig. 11, when the vehicle 110 departs from the stores 11 to 14. For example, when the ignition switch of the vehicle 110 is turned on after the vehicle 110 arrives at the store 11, the processing unit 220 may execute the processing similar to the processing described with reference to S303 of Fig. 4 and Fig. 11.

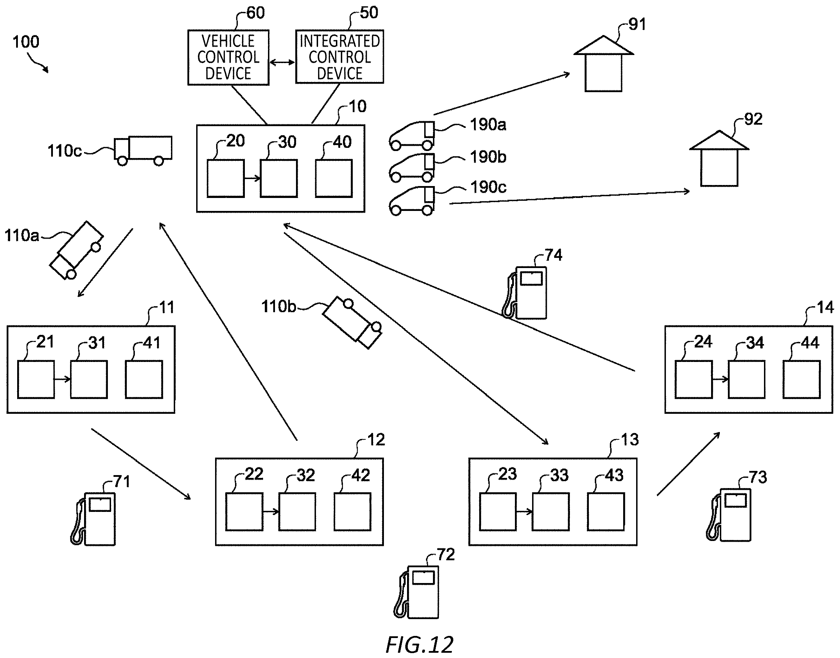

Fig. 12 is a schematic diagram for explaining processing of the processing unit 220 in a second embodiment. As described above, the first embodiment is an embodiment in a case where it is determined that one vehicle 110 operates in the order of the store 11, the store 12, the store 13, and the store 14. On the other hand, the second embodiment is an embodiment in a case where it is determined that the vehicle 110 operates in the order of the store 11, the store 12, the store 13, and the store 14, and simultaneous operation by two vehicles 110 is permitted.

In the second embodiment, on the basis of the delivery information and the power demand information, the processing unit 220 decides operation information and power transmission/reception information in which the vehicle 110a departs from the base 10 and then returns to the base 10 via the store 11 and the store 12. In addition, until the vehicle 110a returns to the base 10 after the vehicle 110a departs from the base 10, on the basis of the delivery information and the power demand information, the processing unit 220 decides operation information and power transmission/reception information in which the vehicle 110b departs from the base 10 and returns to the base 10 via the store 13 and the store 14. Note that, in the second embodiment, instead of the determination that the operation is performed in the order of the base 10, the store 11, the store 12, the store 13, the store 14, and the base 10 in the first embodiment, the processing unit 220 may perform processing of independently deciding the operation information and the power transmission/reception information on the assumption that it is determined that the operation is performed in the order of the base 10, the store 11, the store 12, and the base 10 and the operation is performed in the order of the base 10, the store 13, the store 14, and the base 10.

Note that, in the second embodiment, the processing unit 220 may generate operation information and power transmission/reception information in which the vehicle 110a departs from the base 10 and then arrives at the store 11, departs from the store 11 and then returns to the base 10 without passing through other stores 12 to 14, departs from the base 10 and then arrives at the store 12, and departs from the store 12 and then returns to the base 10 without passing through other stores 13 and 14.

The second embodiment may be an embodiment applied when the operation information and the power transmission/reception information that satisfy the delivery information and the power demand cannot be decided by the processing described in connection with the first embodiment. According to the second embodiment, it is possible to flexibly respond to a delivery request to each of the stores 11 to 14 and a power demand request.

In the first embodiment and the second embodiment, an aspect may be adopted in which the processing unit 220 decides the operation information and the power transmission/reception information by giving priority to the power demand in each of the stores 11 to 14 over the delivery demand in each of the stores 11 to 14. For example, the processing unit 220 may decide operation information and power transmission/reception information for minimizing the amount of power necessary for the vehicle 110 to travel and the amount of power received from the grid by each of the stores 11 to 14 in each of the stores 11 to 14, and confirm the operation information and the power transmission/reception information when the delivery information can be satisfied by the operation information. Note that when the delivery information cannot be satisfied by the operation information and the power transmission/reception information, the processing unit 220 may decide the operation information and the power transmission/reception information for minimizing the amount of power for the vehicle 110 to travel and the amount of power received from the grid by each of the stores 11 to 14 in each of the stores 11 to 14 within a range at least satisfying the delivery information. When both the delivery information and the power demand cannot be satisfied, the processing unit 220 may decide the operation information and the power transmission/reception information to satisfy the delivery information in the stores 11 to 14 and satisfy the power demand of some predetermined stores among the stores 11 to 14. In addition, when both the delivery information and the power demand cannot be satisfied, the processing unit 220 may decide the operation information and the power transmission/reception information to satisfy the delivery information of some predetermined stores among the stores 11 to 14 within a range of satisfying at least the power demand of the stores 11 to 14. When both the delivery information and the power demand cannot be satisfied, the processing unit 220 may decide the operation information and the power transmission/reception information to satisfy at least the delivery demand and the power demand of some predetermined stores among the stores 11 to 14. Note that the some predetermined stores among the stores 11 to 14 may be stores which are predetermined to be maintained in an emergency such as a power outage or an earthquake.

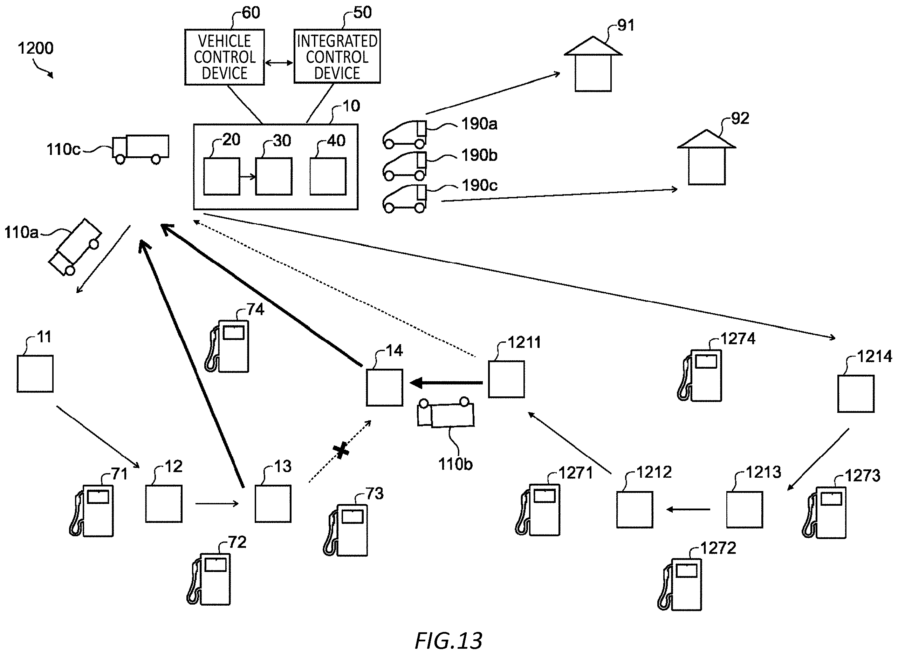

Fig. 13 is a schematic diagram for explaining processing of the processing unit 220 in the control system 1200 according to a third embodiment. As described above, the first embodiment is an embodiment in a case where it is determined that one vehicle 110 operates in the order of the store 11, the store 12, the store 13, and the store 14. On the other hand, the third embodiment is an embodiment in a case where the order of going via the store is not determined. The control system 1200 will be described as including a store 1211, a store 1212, a store 1213, a store 1214, a stand 1271, a stand 1272, a stand 1273, and a stand 1274 in addition to the configuration of the first embodiment.

In the third embodiment, on the basis of the delivery information and the power demand information, the processing unit 220 decides operation information and power transmission/reception information in which the vehicle 110a departs from the base 10 and then returns to the base 10 via the store 11, the store 12, the store 13, and the store 14. In addition, the processing unit 220 decides operation information and power transmission/reception information in which the vehicle 110b departs from the base 10 and then returns to the base 10 via the store 1214, the store 1213, the store 1212, and the store 1211.

In this case, until the vehicle 110 arrives at the store 14 after the vehicle 110a departs from the base 10, when it is determined from the latest infrastructure information, the traveling battery information of the vehicle 110a, and the like that it is not possible to satisfy at least one of the delivery information or the power demand information for the store 14, the processing unit 220 generates new operation information and power transmission/reception information in which the vehicle 110b departs from the store 1211 and then returns to the base 10 via the store 14. The processing unit 220 may periodically acquire the remaining amount of the traveling battery of the vehicle 110b and, when it is possible to supply power exceeding the power demands of the store 1214, the store 1213, the store 1212, the store 1211, and the base 10, may generate new operation information and power transmission/reception information in which the vehicle returns to the base 10 via the store 14. Accordingly, it is possible to increase a possibility of satisfying the delivery information and the power demand information for the store 14.

As described above, according to the control systems 100 and 1200 according to the above-described embodiments, by using the traveling battery included in the vehicle 110, it is possible to perform energy management in the base 10 and energy management in the stores 11 to 14 while satisfying the delivery demand in the stores 11 to 14 other than the base 10. Accordingly, optimal energy management can be performed in all of the base 10 and the stores 11 to 14.

The vehicle 110 is a vehicle as an example of transportation equipment. The vehicle includes at least a battery. The vehicle may include an internal combustion engine which generates driving force for traveling. The vehicle may include an internal combustion engine which generates power for charging the battery. The vehicle may be an automobile such as an electric vehicle and a fuel cell vehicle (FCV). The automobile includes a bus, a truck, a two-wheeled vehicle, or the like. The vehicle may be a saddled vehicle or a bike. The transportation equipment includes, besides a vehicle, an aircraft including as an unmanned aircraft or a machine such as a ship. The transportation equipment may be any machine for transporting humans or products. The transportation equipment is an example of a moving body. The moving body is not limited to transportation equipment and may be any machine that can move.

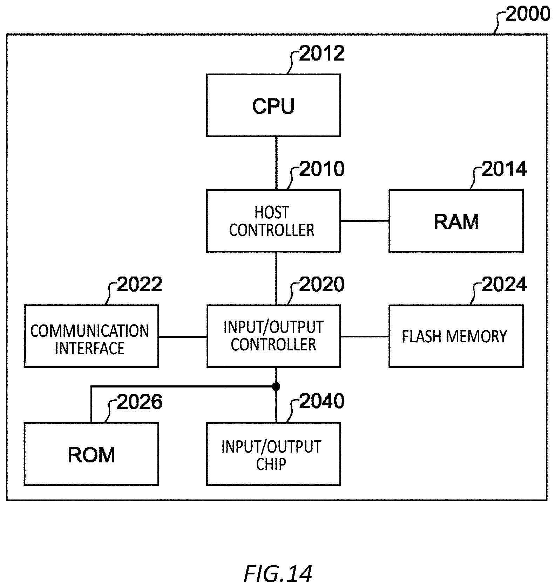

Fig. 14 shows an example of a computer 2000 in which a plurality of embodiments of the present invention may be entirely or partially embodied. A program installed in the computer 2000 can cause the computer 2000 to function as a control system or each unit of the control system, a device such as a control device, or each unit of the device according to the embodiment to execute an operation associated with the system or each unit of the system, the device, or each unit of the device and/or execute a process or a step of the process according to the embodiment. Such a program may be executed by a CPU 2012 in order to cause the computer 2000 to execute a specific operation associated with some or all of the processing procedures and the blocks in the block diagrams described herein.

The computer 2000 according to the present embodiment includes the CPU 2012 and a RAM 2014, which are mutually connected by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to programs stored in the ROM 2026 and the RAM 2014, and thereby controls each unit.

The communication interface 2022 communicates with other electronic devices via a network. The flash memory 2024 stores a program and data used by the CPU 2012 in the computer 2000. The ROM 2026 stores a boot program or the like executed by the computer 2000 during activation, and/or a program depending on hardware of the computer 2000. The input/output chip 2040 may also connect various input/output units such as a keyboard, a mouse, and a monitor, to the input/output controller 2020 via input/output ports such as a serial port, a parallel port, a keyboard port, a mouse port, a monitor port, a USB port, a HDMI (registered trademark) port.

A program is provided via a network or a computer-readable storage medium such as a CD-ROM, a DVD-ROM, or a memory card. The RAM 2014, the ROM 2026, or the flash memory 2024 is an example of the computer-readable storage medium. The program is installed in the flash memory 2024, the RAM 2014 or the ROM 2026 and executed by the CPU 2012. Information processing written in these programs is read by the computer 2000, and provides cooperation between the programs and the various types of hardware resources described above. A device or a method may be actualized by executing operations or processing of information depending on a use of the computer 2000.

For example, when communication is executed between the computer 2000 and an external device, the CPU 2012 may execute a communication program loaded in the RAM 2014, and instruct the communication interface 2022 to execute communication processing based on processing written in the communication program. Under the control of the CPU 2012, the communication interface 2022 reads transmission data stored in a transmission buffer processing region provided in a recording medium such as the RAM 2014 or the flash memory 2024, transmits the read transmission data to the network, and writes reception data received from the network into a reception buffer processing region or the like provided on the recording medium.

In addition, the CPU 2012 may cause all or a necessary portion of a file or a database stored in a recording medium such as the flash memory 2024 to be read into the RAM 2014, and execute various types of processing on the data on the RAM 2014. Next, the CPU 2012 writes back the processed data into the recording medium.

Various types of information such as various types of programs, data, a table, and a database may be stored in the recording medium and may be subjected to information processing. The CPU 2012 may execute, on the data read from the RAM 2014, various types of processing including various types of operations, information processing, conditional judgement, conditional branching, unconditional branching, information retrieval/replacement, or the like described in this specification and specified by instruction sequences of the programs, and write back a result into the RAM 2014. In addition, the CPU 2012 may search for information in a file, a database, or the like in the recording medium. For example, when multiple entries, each having an attribute value of a first attribute associated with an attribute value of a second attribute, is stored in the recording medium, the CPU 2012 may search for an entry having a designated attribute value of the first attribute that matches a condition from the multiple entries, and read the attribute value of the second attribute stored in the entry, thereby obtaining the attribute value of the second attribute associated with the first attribute that satisfies a predetermined condition.

The programs or software modules explained above may be stored in the computer-readable storage medium on the computer 2000 or in the vicinity of the computer 2000. A recording medium such as a hard disk or a RAM provided in a server system connected to a dedicated communication network or the Internet can be used as the computer-readable storage medium. A program stored in the computer-readable storage medium may be provided to the computer 2000 via a network.

The program installed in the computer 2000 to cause the computer 2000 to function as the integrated control device 50 may work on the CPU 2012 or the like to cause the computer 2000 to function as each unit of the integrated control device 50. The information processing described in these programs is read by the computer 2000 to function as each unit of the integrated control device 50 which is a specific means in which software and the above-described various hardware resources cooperate. Then, when calculation or processing of information according to the use purpose of the computer 2000 in the present embodiment is realized by these specific means, the unique integrated control device 50 according to the use purpose is constructed.

Various embodiments have been explained with reference to the block diagrams and the like. In the block diagrams, each block may represent (1) a stage of a process in which an operation is executed, or (2) each unit of the device having a role in executing the operation. A specific stage and unit may be implemented by a dedicated circuit, a programmable circuit supplied with computer-readable instructions stored on a computer-readable storage medium, and/or a processor supplied with computer-readable instructions stored on a computer-readable storage medium. The dedicated circuit may include a digital and/or analog hardware circuit, or may include an integrated circuit (IC) and/or a discrete circuit. The programmable circuit may include a reconfigurable hardware circuit including logical AND, logical OR, logical XOR, logical NAND, logical NOR, and other logical operations, and a memory element such as a flip-flop, a register, a field programmable gate array (FPGA), a programmable logic array (PLA), or the like.

The computer-readable storage medium may include any tangible device capable of storing instructions to be executed by an appropriate device. Thereby, the computer-readable storage medium having instructions stored therein forms at least a part of a product including instructions which can be executed to provide means for executing processing procedures or operations specified in the block diagrams. An example of the computer-readable storage medium may include an electronic storage medium, a magnetic storage medium, an optical storage medium, an electromagnetic storage medium, or a semiconductor storage medium. More specific examples of the computer-readable storage medium may include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disk (DVD), a Blu-ray (registered trademark) disk, a memory stick, an integrated circuit card, or the like.

The computer-readable instruction may include an assembler instruction, an instruction-set-architecture (ISA) instruction, a machine instruction, a machine dependent instruction, a microcode, a firmware instruction, state-setting data, or either of source code or object code written in any combination of one or more programming languages including an object oriented programming language such as Smalltalk (registered trademark), JAVA (registered trademark), and C++, and a conventional procedural programming language such as a "C" programming language or a similar programming language.

Computer-readable instructions may be provided to a processor of a general purpose computer, a special purpose computer, or other programmable data processing device, or to programmable circuit, locally or via a local area network (LAN), wide area network (WAN) such as the Internet, and a computer-readable instruction may be executed to provide means for executing operations specified in the explained processing procedures or block diagrams. Examples of the processor include a computer processor, a processing unit, a microprocessor, a digital signal processor, a controller, a microcontroller, and the like.

While the present invention has been described by way of the embodiments, the technical scope of the present invention is not limited to the above described embodiments. It is apparent to persons skilled in the art that various alterations or improvements can be made to the above described embodiments. It is also apparent from the description of the claims that embodiments added with such alterations or improvements can be included in the technical scope of the present invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: base;
11: store;
12: store;
13: store;
14: store;
20: power generation device;
21: power generation device;
22: power generation device;
23: power generation device;
24: power generation device;
30: stationary battery;
31: stationary battery;
32: stationary battery;
33: stationary battery;
34: stationary battery;
40: power control device;
41: power control device;
42: power control device;
43: power control device;
44: power control device;
50: integrated control device;
60: vehicle control device;
71: stand;
72: stand;
74: stand;
91, 92: residence;
100: control system;
110: vehicle;
190: delivery vehicle;
200: calculation unit;
210: acquisition unit;
220: processing unit;
280: storage unit;
290: communication unit;
1200: control system;
1211: store;
1212: store;
1213: store;
1214: store;
1271: stand;
1272: stand;
1273: stand;
1274: stand;
2000: computer;
2010: host controller;
2012: CPU;
2014: RAM;
2020: input/output controller;
2022: communication interface;
2024: flash memory;
2026: ROM; and
2040: Input/output chip.

## Claims

1. An integrated control device comprising:
an acquisition unit which acquires (I) a first demand sent from an energy control device which controls energy and including a demand amount, a demand time, and a demand position related to an energy demand, and (II) a second demand sent from a moving body control device which controls a moving body and including a demand amount, a demand time, and a demand position related to a demand of the moving body; and
a processing unit which performs at least one of processing of deciding, on a basis of the first demand and the second demand acquired by the acquisition unit, a position and time at which the moving body moves or processing of determining whether it is possible to satisfy both demands of the first demand and the second demand.

2. The integrated control device according to claim 1, wherein
the processing unit manages first supply information that the moving body is capable of further supplying over the demand amount included in the first demand and second supply information that the moving body is capable of further supplying over the demand amount indicated by the second demand, and re-decides the position and the time, at which the moving body moves, according to the first demand and the second demand newly acquired by the acquisition unit.

3. The integrated control device according to claim 1 or 2, wherein
when determining that it is not possible to satisfy the both demands of the first demand and the second demand, the processing unit decides the position and the time, at which the moving body moves, by giving priority to one of the first demand and the second demand over another.

4. The integrated control device according to claim 3, wherein
When determining that it is not possible to satisfy the both demands of the first demand and the second demand, the processing unit decides the position and the time, at which the moving body moves, to satisfy at least the second demand and satisfy at least a demand amount and a demand time at some predetermined demand positions among a plurality of demand positions including the demand position that are included in the first demand.

5. The integrated control device according to claim 1 or 2, wherein
the processing unit decides, on a basis of the first demand, the position and the time at which the moving body moves, and determine, on a basis of the position and the time at which the moving body moves and which are decided on the basis of the first demand, whether the second demand is satisfied.

6. The integrated control device according to any one of claims 1 to 5, wherein
after the moving body starts moving on a basis of the position and the time at which the moving body moves and which are decided on a basis of the first demand and the second demand, the processing unit re-decides the position and the time, at which the moving body moves, each time a predetermined condition is satisfied.

7. The integrated control device according to claim 6, wherein
the processing unit re-decides the position and the time, at which the moving body moves, each time the moving body arrives at the demand position.

8. The integrated control device according to claim 6, wherein
the processing unit re-decides the position and the time, at which the moving body moves, each time the moving body departs from the demand position.

9. A server comprising:
an acquisition unit which acquires (I) a first demand sent from an energy control device and including a demand amount, a demand time, and a demand position related to an energy demand, and (II) a second demand sent from a moving body control device which controls a moving body and including a demand amount, a demand time, and a demand position related to a demand of the moving body; and
a processing unit which performs at least one of processing of deciding, on a basis of the first demand and the second demand acquired by the acquisition unit, a position and time at which the moving body moves or processing of determining whether it is possible to satisfy both demands of the first demand and the second demand.

10. A control method comprising:
acquiring a first demand including a demand amount, a demand time, and a demand position related to an energy demand;
acquiring a second demand including a demand amount, a demand time, and a demand position related to a demand of a moving body; and
performing at least one of processing of deciding, on a basis of the first demand and the second demand, a position and time at which the moving body moves or processing of determining whether it is possible to satisfy both demands of the first demand and the second demand.

11. A program for causing a computer to function as the integrated control device according to any one of claims 1 to 8.

12. A storage medium having stored thereon the program according to claim 11.
